(19) Europäisches Patentamt
European Patent Office
Office européen des brevets

(11) Veröffentlichungsnummer: **0 578 082 A2**

# (12) EUROPÄISCHE PATENTANMELDUNG

(21) Anmeldenummer: **93110226.3**

(22) Anmeldetag: **26.06.93**

(51) Int. Cl.5: **C08L 23/08**

(30) Priorität: **08.07.92 DE 4222301**

(43) Veröffentlichungstag der Anmeldung:
**12.01.94 Patentblatt 94/02**

(84) Benannte Vertragsstaaten:
**BE DE ES FR GB IT NL**

(71) Anmelder: **BASF Aktiengesellschaft**
**Carl-Bosch-Strasse 38**
**D-67063 Ludwigshafen(DE)**

(72) Erfinder: **Muehlenbernd, Thomas, Dr.**
**143 Tokyo-to, Ota-ku,**
**Minami Magome, 5-chome**
**42-10-904 Dear State Minami Magome(JP)**
Erfinder: **Vogt, Heinz, Dr.**
**Pranckhstrasse 30**
**D-6700 Ludwigshafen(DE)**
Erfinder: **Moench, Dietmar, Dr.**
**Haselnussweg 9**
**D-6940 Weinheim(DE)**
Erfinder: **Hahn, Susanne, Dr.**
**Friedrich-Karl-Strasse 1**
**D-6800 Mannheim 1(DE)**
Erfinder: **Telser, Thomas, Dr.**
**Langer Wiesenweg 13**
**D-6940 Weinheim(DE)**
Erfinder: **Kingma, Arend Jouke, Dr.**
**Ruedigerstrasse 48**
**D-6700 Ludwigshafen(DE)**

(54) **Homogenes polymeres Ammoniumsalz und seine Verwendung.**

(57) Das neue homogene polymere Ammoniumsalz von stofflich einheitlicher Zusammensetzung aus mindestens einem Ethylencopolymerisat oder -terpolymerisat (A), welches, bezogen auf seine Gesamtmenge, 0,5 bis 50 Gew.-% mindestens einer $\alpha,\beta$-olefinisch ungesättigten Alkenmono- und/oder Alkendicarbonsäure, mindestens eines $\alpha,\beta$-olefinisch ungesättigten Alkenmono- und/oder Alkendicarbonsäureanhydrids und/oder mindestens eines $\alpha,\beta$-olefinisch ungesättigten Alkendicarbonsäurehalbesters einpolymerisiert enthält, und mindestens einem Polyalkylenimin (B) und/oder Polyvinylamin (B) mit mehr als 3 Aminogruppen im Molekül eignet sich hervorragend als Schmelzkleber sowie für die Herstellung von Folien, Formteilen, lichtempfindlichen Aufzeichnungselementen und Kabelummantelungen für elektrische Mittel- und Hochspannungskabel.

EP 0 578 082 A2

Die vorliegende Erfindung betrifft ein neues, homogenes polymeres Ammoniumsalz von stofflich einheitlicher Zusammensetzung aus

A) mindestens einem Ethylencopolymerisat oder -terpolymerisat, welches, bezogen auf seine Gesamtmenge, 0,5 bis 50 Gew.-% mindestens einer α,β-olefinisch ungesättigten Alkenmono- und/oder Alkendicarbonsäure, mindestens eines α,β-olefinisch ungesättigten Alkenmono- und/oder Alkendicarbonsäureanhydrids und/oder mindestens eines α,β-olefinisch ungesättigten Alkendicarbonsäurehalbesterseinpolymerisiert enthält, und

B) mindestens einem Polyalkylenimin und/oder Polyvinylamin mit mehr als 3 Aminogruppen im Molekül.

Homogene polymere Ammoniumsalze von stofflich einheitlicher Zusammensetzung aus den vorstehend genannten Ethylencopolymerisaten oder -terpolymerisaten (A) und Triaminen sind aus der US-A-3 404 134, der US-A-3 471 460, der EP-A-0 223 114 oder der EP-A-0 231 002 bekannt. Diese homogenen polymeren Ammoniumsalze werden allgemein auch als "Ionomere" bezeichnet. Die Salzbildung mit den Triaminen bewirkt eine Verbesserung der mechanischen Eigenschaften und der Transparenz der Ethylencopolymerisate und -terpolymerisate (A). Diese bekannten homogenen polymeren Ammoniumsalze können deshalb auch für die Herstellung lichtempfindlicher Aufzeichnungselemente dienen, welche sich für die Weiterverarbeitung zu flexographischen Reliefdruckplatten eignen (vgl. die EP-A-0 293 750). Nachteilig für die bekannten homogenen polymeren Ammoniumsalze ist, daß die darin enthaltenen Triamine noch vergleichsweise flüchtig sind, was insbesondere in feuchtwarmen Klimata und/oder in beheizten geschlossenen Räumen zu einer merklichen Geruchsbelästigung führen kann. Um diese Geruchsbelästigung von vornherein auszuschließen, wurde versucht, anstelle der Triamine basische Polymerisate wie Polyvinylpyridin zu verwenden. Indes führt dieser Ersatz zu getrübten, stofflich uneinheitlichen Produkten mit vergleichsweise ungünstigen anwendungstechnischen Eigenschaften.

Die Umsetzung von Ethylencopolymerisaten oder -terpolymerisaten (A) mit Polyethylenimin (B) ist aus der JP-A-56/086 976, der US-A-4 820 215 oder der US-A-4 284 672 bekannt.

So geht aus der JP-A-56/086 976 eine Klebstoffzusammensetzung hervor, welche eine Emulsion aus einem Ethylen-Vinylacetat-Copolymerisat (A) mit Säuregruppen und Polyethylenimin enthält. Bei der Herstellung des Klebstoffs wird das Polyethylenimin in einem geeigneten Lösungsmittel vorgelöst und anschließend mit der Emulsion vermischt. Wegen dieser Herstellweise hat aber der resultierende Klebstoff keine homogene, stofflich einheitliche Zusammensetzung.

In der US-A-4 020 215 wird die Reaktion zwischen den Ethylencopolymerisaten oder -terpolymerisaten (A) und Polyalkyleniminen (B) dazu angewandt, eine hohe Haftung in einem Laminat zu erzielen. Zu diesem Zweck wird ein Substrat wie Papier durch Gießen aus Lösung mit einer dünnen Schicht aus Polyethylenimin überzogen. Das mit Polyethylenimin getränkte Substrat wird anschließend mit dem Ethylencopolymerisat oder -terpolymerisat (A) beschichtet. Auch bei dieser Herstellweise kann kein homogenes polymeres Ammoniumsalz von stofflich einheitlicher Zusammensetzung entstehen.

Dies gilt auch für das aus der US-A-4 284 672 bekannte Laminat, bei dem mit Hilfe einer Polyethylenimin- und einer Ethylencopolymerisatschicht eine haftfeste Verbindung zwischen einer Polyamidschicht und einer Metallfolie erreicht wird.

Insgesamt weisen die bei diesen Reaktionen entstehenden Klebstoffschichten eine hohe Klebkraft auf, über die sonstigen Eigenschaften und die genaue stoffliche Zusammensetzung und Struktur ist dem Stand der Technik indes nichts Näheres zu entnehmen.

Aus der EP-A-0 358 082 ist es außerdem noch bekannt, homogene polymere Ammoniumsalze von stofflich einheitlicher Zusammensetzung aus Ethylencopolymerisaten (A) und tertiären Aminen wie Tri-n-hexylamin oder Triethanolamin für die Herstellung von Kabelummantelungen mit hoher Widerstandsfähigkeit gegenüber dem Entstehen und dem Wachstum von Wasserbäumchen (water trees) und von hoher Alterungsbeständigkeit zu verwenden. Auch bei der Herstellung dieser bekannten Ionomeren können die vorstehend genannten Geruchsbelästigungen auftreten.

Aufgabe der vorliegenden Erfindung ist es, ein neues, homogenes polymeres Ammoniumsalz von stofflich einheitlicher Zusammensetzung bereitzustellen, welches vorzügliche mechanische Eigenschaften und eine hohe Transparenz aufweist und keine Probleme der Geruchsbelästigung mehr aufwirft. Außerdem soll sich das neue, homogene polymere Ammoniumsalz als Schmelzkleber sowie für die Herstellung von Folien, Formteilen, lichtempfindlichen Aufzeichnungselementen und Kabelummantelungen für elektrische Mittel- und Hochspannungskabel eignen.

Demgemäß wurde das eingangs definierte homogene polymere Ammoniumsalz von stofflich einheitlicher Zusammensetzung gefunden, welches im folgenden der Kürze halber als "erfindungsgemäßes Ionomer" bezeichnet wird.

Das erfindungsgemäße Ionomer ist homogen und von stofflich einheitlicher Zusammensetzung. Dies bedeutet, daß die erfindungsgemäßen Ionomeren und die hieraus hergestellten Gegenstände wie Folien oder Formteile keine Bereiche aufweisen, in denen die Ionomerzusammensetzung vom vorgewählten Verhältnis von erfindungswesentlichem Bestandteil (A) zu erfindungswesentlichem Bestandteil (B) abweicht. Eine solche Abweichung tritt zwangsweise ein, wenn man die in der JP-A-56/086 976, der US-A-4 020 215 oder der US-A-4 284 672 beschriebenen Verfahren anwendet.

Der erste wesentliche Bestandteil des erfindungsgemäßen Ionomeren ist mindestens ein Ethylencopolymerisat und/oder -terpolymerisat, welches mindestens eine $\alpha,\beta$-olefinisch ungesättigte Alkenmono- und/oder Alkendicarbonsäure, mindestens ein $\alpha,\beta$-olefinisch ungesättigtes Alkenmono- und/oder Alkendicarbonsäureanhydrid und/oder mindestens einen $\alpha,\beta$-olefinisch ungesättigten Alkendicarbonsäurehalbester einpolymerisiert enthält. Diese essentiellen Comonomeren sind in dem erfindungswesentlichen Bestandteil (A) in einer Menge von 0,5 bis 50 Gew.-% enthalten. Werden weniger als 0,5 Gew.-% dieser essentiellen Comonomeren angewandt, resultieren Ethylencopolymerisate oder -terpolymerisate, welche sich nicht mehr länger für die Herstellung der erfindungsgemäßen Ionomeren eignen. Werden dagegen mehr als 50 Gew.-% der essentiellen Comonomeren angewandt, resultieren Ethylencopolymerisate und/oder -terpolymerisate, welche Ionomere eines weniger günstigen anwendungstechnischen Eigenschaftsprofils liefern. Demnach handelt es sich bei dem Bereich von 0,5 bis 50 Gew.-% um einen optimalen Bereich, innerhalb dessen die Menge der essentiellen Comonomeren hervorragend dem jeweils zu lösenden technischen Problem angepaßt werden kann. Innerhalb dieses optimalen Bereichs ist derjenige von 2 bis 40 Gew.-% hervorzuheben, weil Ethylencopolymerisate und -terpolymerisate (A), welche eine solche Menge essentieller Comonomerer einpolymerisiert enthalten, besonders vorteilhafte erfindungsgemäße Ionomere liefern. Innerhalb dieses Bereichs ist derjenige von 5 bis 30 Gew.-% hervorzuheben, weil die Verwendung solcher Comonomermengen die Bildung von erfindungsgemäßen Ionomeren mit herausragendem anwendungstechnischen Eigenschaftsprofil zur Folge hat.

Demzufolge enthalten die erfindungsgemäß zu verwendenden Ethylencopolymerisate (A), bezogen auf ihre Gesamtmenge, 50 bis 99,5, vorteilhafterweise 60 bis 98 und insbesondere 70 bis 95 Gew.-% an einpolymerisiertem Ethylen. Handelt es sich bei dem erfindungswesentlichen Bestandteil (A) um ein Ethylenterpolymerisat (A), so enthält dieses außer den vorstehend genannten Mengen an einpolymerisiertem Ethylen und einpolymerisierten essentiellen Comonomeren noch mindestens ein einpolymerisiertes Termonomer, dessen Menge breit variiert werden kann. Indes darf nicht soviel Termonomer angewandt werden, daß der Gehalt an einpolymerisiertem Ethylen und essentiellem Comonomer außerhalb der vorstehend angegebenen optimalen Bereiche liegen. Erfindungsgemäß vorteilhafte Ethylenterpolymerisate (A) enthalten, bezogen auf ihre jeweilige Gesamtmenge, 5 bis 40, vorzugsweise 7 bis 35 und insbesondere 10 bis 30 Gew.-% an einpolymerisiertem Termonomeren.

Für die Herstellung des erfindungswesentlichen Bestandteils (A), d. h. des erfindungsgemäß zu verwendenden Ethylencopolymerisats oder -terpolymerisats (A), kommen alle $\alpha,\beta$-olefinisch ungesättigten Alkenmono- und Alkendicarbonsäuren, Alkenmono- und Alkendicarbonsäureanhydride und Alkendicarbonsäurehalbester in Betracht, welche mit Ethylen co- oder terpolymerisiert werden können.

Beispiele geeigneter $\alpha,\beta$-olefinisch ungesättigter Alkenmonocarbonsäuren sind Acrylsäure, Methacrylsäure und Crotonsäure, von denen Acrylsäure und Methacrylsäure besonders vorteilhaft sind und deshalb bevorzugt angewandt werden.

Beispiele geeigneter $\alpha,\beta$-olefinisch ungesättigter Alkendicarbonsäuren sind Fumarsäure, Maleinsäure und Itaconsäure, von denen Maleinsäure vorteilhaft ist und deshalb bevorzugt angewandt wird.

Beispiele geeigneter $\alpha,\beta$-olefinisch ungesättigter Alkenmono- und Alkendicarbonsäureanhydride sind die reinen und die gemischten Anhydride der Acrylsäure, Methacrylsäure und Crotonsäure sowie Malein- und Itaconsäureanhydrid, von denen Maleinsäureanhydrid vorteilhaft ist und deshalb bevorzugt angewandt wird.

Beispiele geeigneter Alkendicarbonsäurehalbester sind Fumarsäure-, Maleinsäure- und Itaconsäuremono-$C_1$– bis -$C_{10}$-Alkylester, von denen die Fumarsäure- und Maleinsäuremonoalkylester vorteilhaft sind und deshalb bevorzugt angewandt werden.

Ein Teil dieser vorstehend genannten essentiellen Comonomeren kann auch auf das Ethylencopolymerisat und -terpolymerisat (A) aufgepfropft sein.

Für die Herstellung der erfindungsgemäß zu verwendenden Ethylenterpolymerisate (A) kommen grundsätzlich alle Termonomeren in Betracht, welche sich mit Ethylen und den vorstehend genannten essentiellen Comonomeren terpolymerisieren lassen.

Beispiele geeigneter Termonomerer sind $C_3$- bis $C_8$-$\alpha$-Monoolefine wie Propylen, But-1-en, Pent-1-en, Hex-1-en, Hept-1-en und Oct-1-en; Alkadiene wie Butadien, Penta-1,4-dien, Isopren, Hexa-1,4-dien, Cyclopentadien, Dicyclopentadien, Norbornadien und Ethylidennorbornen; Vinylaromaten wie Styrol, $\alpha$-Methylstyrol, 4-Methylstyrol und Divinylbenzol; Vinylhalogenide wie Vinylfluorid und Vinylchlorid, halogenierte Monoolefine wie Tetrafluorethylen, Chlortrifluorechylen und Vinylidenfluorid; Vinylester wie Vinylacetat und -propionat; Vinylether wie Vinyl-n-butylether sowie Diester, Amide und Nitrile von $\alpha,\beta$-olefinisch ungesättig-

3

EP 0 578 082 A2

ten Alkenmono- und Alkendicarbonsäuren wie die $C_1$- bis $C_8$-Alkylester, Poly(alkylenoxid)-$\alpha$-yl-ester und $\omega$-Alkyl-poly(alkylenoxid)-ester der Acrylsäure, Methacrylsäure, Crotonsäure, Fumarsäure und Maleinsäure, Acrylsäure-, Methacrylsäure- und Crotonsäureamid und Maleinsäure- und Itaconsäuredimid sowie die entsprechenden N-mono- und N, N-di-($C_1$-$C_8$-alkyl)-substituierten Derivate.

Von all diesen Termonomeren sind die $C_3$- bis $C_8$-$\alpha$-Monoolefine und die Ester der Acrylsäure und Methacrylsäure besonders vorteilhaft und werden deshalb besonders bevorzugt verwendet. Von diesen sind wiederum die Ester der Acrylsäure und Methacrylsäure wie Methyl-, Ethyl-, i-Propyl-, n-Propyl-, n-Butyl-, tert.-Butyl-, n-Pentyl-, n-Hexyl-, n-Heptyl-, n-Octyl- und 2-Ethylhexyl(meth)acrylat ganz besonders vorteilhaft und werden deshalb ganz besonders bevorzugt als Termonomere verwendet.

Die vorstehend beschriebenen erfindungswesentlichen Bestandteile (A) und ihre Herstellung sind an sich bekannt und werden beispielsweise in den Patentschriften GB-A-2 091 745, US-A-3 520 861, US-A-3 264 272, GB-A-1 011 981, US-A-3 404 134, US-A-3 969 434, DE-A-3 639 564, DE-A-3 639 566, EP-A-0 231 002, EP-A-0 223 114 oder EP-A-0 293 750 beschrieben.

Bei dem zweiten erfindungswesentlichen Bestandteil (B) handelt es sich um ein Polyalkylenimin und/oder ein Polyvinylamin. Beide weisen mehr als 3 Aminogruppen im Molekül auf.

Das erfindungswesentliche Polyvinylamin (B) ist ein übliches und bekanntes, im Handel erhältliches Polymerisat. Seine Eigenschaften und seine Herstellung werden u.a. in der EP-A 71 050 beschrieben.

Beispiele geeigneter Polyalkylenimine sind Polyethylenimin, Polypropylenimin, Polybutylenimin, Polyisobutylenimin und Poly-N-Methylethylenimin. Diese Alkylenimine können noch untergeordnete Mengen an N-substituierten Alkyleniminen wie N-Acetyl-ethylenimin und N-Propionyl-ethylenimin einpolymerisiert enthalten. Auch die Polyalkylenimine sind übliche und bekannte, im Handel erhältliche Verbindungen. Ihre Eigenschaften und Herstellung werden in der Encylcopedia of Polymer Science and Engineering, John Wiley & Sons, Vol. 1, Seiten 680ff, 1978, beschrieben. Weitere Beispiele erfindungsgemäß geeigneter Polyalkylenimine (B) gehen aus der EP-A-0 409 783 hervor. Von all diesen Polyalkyleniminen (B) ist Polyethylenimin (B) besonders vorteilhaft und wird deshalb besonders bevorzugt angewandt.

Die erfindungsgemäßen Ionomere können die erfindungswesentlichen Bestandteile (A) und (B) in breit variierenden Mengenverhältnissen enthalten. Indes ist es von Vorteil, nur soviel an erfindungsgemäßen Bestandteilen (B) anzuwenden, daß 100 Mol.-% der in dem erfindungsgemäßen Bestandteil (A) vorhandenen freien Carboxylgruppen zu Salzgruppen umgewandelt werden. Andererseits soll die angewandte Menge an erfindungswesentlichen Bestandteilen (B) ausreichen, um mindestens 5, vorteilhafterweise 10 und insbesondere 15 Mol.-% der in dem erfindungswesentlichen Bestandteil (A) vorhandenen freien Carboxylgruppen zu neutralisieren.

Methodisch gesehen weist die Herstellung der erfindungsgemäßen Ionomeren keine Besonderheiten auf, sondern kann nach allen üblichen und bekannten Methoden zur Verarbeitung von Kunststoffen erfolgen, solange diese Methoden die homogene Durchmischung der erfindungswesentlichen Bestandteile (A) und (B) gewährleisten. Beispiele geeigneter Methoden sind das Vermischen der erfindungswesentlichen Bestandteile (A) und (B) in Lösung, durch Kalandrieren, durch Kneten und durch Extrudieren. Für die Herstellung der erfindungsgemäßen Ionomeren werden vorteilhafterweise die in den Patentschriften US-A-3 471 460, EP-A-0 349 827, EP-A-0 349 828 oder EP-A-0 349 826 beschriebenen Extrusionsverfahren angewandt.

Die erfindungsgemäßen Ionomeren sind transparente, geruchsfreie Materialien mit vorzüglichen mechanischen Eigenschaften. So weisen sie einen E-Modul und eine Reißkraft auf, welche gegenüber denjenigen der entsprechenden erfindungswesentlichen Bestandteile (A) um mehrere Größenordnungen erhöht ist. Die Reißdehnung der erfindungsgemäßen Ionomere entspricht derjenigen der entsprechenden erfindungswesentlichen Bestandteile (A). Die erfindungsgemäßen Iononomere sind hart und gleichzeitig zähelastisch und eignen sich deshalb insbesondere für die Herstellung von Folien. Sie lassen sich bei Temperaturen von 80 bis 160 °C aufschmelzen und sind daher hervorragend als Schmelzkleber geeignet. Hierbei ist die Haftung der erfindungsgemäßen Ionomeren auf unpolaren oder kristallinen Substraten wie Polyethylen oder Polyethylenterephthalat ausgezeichnet. Hervorzuheben ist auch die Chemikalienresistenz der erfindungsgemäßen Ionomeren und ihre Quellbeständigkeit gegenüber schwach polaren Flüssigkeiten wie Ethanol oder Essigester. Die erfindungsgemäßen Ionomeren sind auch überraschend stabil gegenüber Wasser. Sie bilden ein deutlich geringeres Korrosionsrisiko als die vom Stand der Technik her bekannten Ionomeren.

Wegen dieses ausgezeichneten Eigenschaftsprofil sind die erfindungsgemäßen Ionomeren hervorragend für die Herstellung von Folien, Formteilen, lichtempfindlichen Aufzeichnungselementen und Kabelummantelungen für elektrische Mittel- und Hochspannungskabel geeignet. Hierbei können sie die Ionomeren mit Vorteil ersetzen, die in den zur Herstellung von flexographischen Reliefdruckplatten dienenden lichtempfindlichen Aufzeichnungselementen der EP-A-0 293 750 enthalten sind. Des weiteren können sie anstelle der in der EP-A-0 358 082 beschriebenen Ionomeren für die Herstellung von Kabelisolierungen mit

4

hoher Widerstandsfähigkeit gegenüber dem Entstehen oder dem Wachstum von Wasserbäumchen (water trees), hoher Alterungsbeständigkeit und guter Verarbeitbarkeit verwendet werden. Die elektrische Mittel- und Hochspannungskabel, welche solche Kabelisolierungen oder Kabelummantelungen enthalten, weisen deshalb ganz besonders vorteilhafte anwendungstechnische Eigenschaften auf.

Beispiele und Vergleichsversuche

Beispiel 1 und Vergleichsversuch VA

Herstellung und Eigenschaften eines erfindungsgemäßen Ionomeren (Beispiel 1) und der Vergleich seiner Eigenschaften mit denen des Ethylenterpolymerisats (A) (Vergleichsversuch VA)

Versuchsvorschrift:

Für das Beispiel 1 und den Vergleichsversuch VA wurde das Ethylenterpolymerisat (A) aus 60 Gew.-% an einpolymerisiertem Ethylen, 20 Gew.-% an einpolymerisierter Acrylsäure und 20 Gew.-% an einpolymerisiertem 2-Ethylhexylacrylat mit einem Schmelzflußindex MFI bei 160°C und einer Auflagekraft von 325 g von 13 g/10 min verwendet. Dieses Ethylenterpolymerisat (A) wurde mittels einer Differentialdosierwaage in den Einzug eines Zweiwellenextruders ZSK 30 der Firma Werner & Pfleiderer eindosiert und darin aufgeschmolzen. Pro Stunde wurden 9 kg des Ethylenterpolymerisats (A) umgesetzt. Hierbei lagen die Gehäusetemperaturen des Extruders in der Aufschmelzzone bei 150°C und im Homogenisierteil bei 130°C. Als Polyalkylenimin (B) wurde ein Polyethylenimin mit einem mittleren Molgewicht von 640 verwendet. Dieser wesentliche Bestandteil (B) wurde aus einem auf 60°C temperierten Vorratsgefäß über eine Zahnradpumpe in den Homogenisierteil des Extruders eindosiert. Die umgesetzte Menge an Polyethylenimin (B) lag hierbei bei 1 kg/h.

Die resultierende Ionomerschmelze wurde auf dem Zweiwellenextruder entgast und als Strang aus einer Lochdüse mit einer Massetemperatur von 140°C ausgetragen. Der austretende Schmelzestrang war transparent und blasen- und stippenfrei. Er wurde mit Hilfe eines Kalanders zwischen zwei Polyesterfolien zu 30 cm breiten und 3 mm dicken Schichten geformt. Die resultierenden Schichten waren völlig transparent. Sie wiesen eine so hohe Haftung zur Polyesterfolie auf, daß sie erst nach Eintauchen in flüssigen Stickstoff durch Absprengen hiervon getrennt werden konnten.

Aus den extrudierten und kalandrierten Schichten wurden Proben der Breite 2 cm und der Einspannlänge 10 cm für Zugversuche und für Quellungsmessungen herausgestanzt. Die Zugversuche wurden mit einer konstanten Abzugsgeschwindigkeit von 10 cm/min. durchgeführt. Die Reißspannung und die Reißdehnung wurden nach DIN 53 455 an jeweils 5 Proben gemessen. Aus den hierbei erhaltenen Werten wurden die Mittelwerte errechnet. Zur Bestimmung der Lösungsmittelbeständigkeit wurden die Proben 24 Stunden in die jeweilige Flüssigkeit eingetaucht, und es wurde die Gewichtszunahme in Gew.-% vom Ausgangsgewicht bestimmt.

Die hierbei resultierenden Versuchsergebnisse werden in der Tabelle 1 den betreffenden Werten des Vergleichsversuchs VA gegenübergestellt. Der Vergleich der Werte zeigt, daß das erfindungsgemäße Ionomer bessere mechanische Eigenschaften und eine höhere Quellbeständigkeit aufwies als das Ethylenterpolymerisat (A), aus dem es hergestellt worden war.

Vergleichsversuch VA

Die Herstellung von extrudiertem und kalandrierten Schichten aus einem Ethylenterpolymerisat (A)

Versuchsvorschrift:

Beispiel 1 wurde wiederholt, nur daß die Zugabe des Polyethylenimins unterblieb.

Die bei dem Vergleichsversuch VA erhaltenen Werte finden sich in der Tabelle 1. Der Vergleich mit den Werten des Beispiel 1 belegt, daß das Ethylenterpolymerisat (A) dem erfindungsgemäßen Ionomer unterlegen war.

Beispiel 2

Die Herstellung eines erfindungsgemäßen Ionomeren und seine Eignung zur Herstellung von Kabelisolierungen für elektrische Mittel- und Hochspannungskabel.

Versuchsvorschrift:

In den Einzug eines Zweiwellenentgasungsextruders vom Typ ZSK 57 der Firma Werner & Pfleiderer mit einem Längen-Durchmesser-Verhältnis von 39 wurden 100 kg/h eines Ethylen-Acrylsäure-Copolymerisats (8 Gew.-% an einpolymerisierter Acrylsäure; Schmelzindex MFI bei einer Temperatur von 190°C und einer Auflagekraft von 2,16 kg: 7 g/10 min., bestimmt nach DIN 53735) eindosiert. Die Länge des Einzugsbereichs lag bei dem 6-fachen des Schneckendurchmessers D.

Das Ethylenpolymerisat wurde im Extruder bei 140°C aufgeschmolzen und in die Reaktionszone einer Länge von 10 D überführt. Die Reaktionszone war in eine Mischzone der Länge 3 D und die eigentliche Reaktionszone (Verweilzone) von 7 D unterteilt. Vor der Mischzone wurde der Polymerschmelze eine 50 %ige Lösung von Polyethylenimin in Wasser (Polymin® P, der Firma BASF AG) in einer Menge von 1 kg/Stunde hinzudosiert und in der Mischzone homogen in der Schmelze verteilt. In einer an die Reaktionszone angeschlossenen zweistufigen Entgasungszone der Länge 12 D wurde das Wasser im Vakuum aus der Polymerschmelze entfernt. Dabei wurde an den ersten Entgasungsstutzen ein Druck von etwa 700 mbar und an den zweiten Entgasungsstutzen von etwa 10 mbar angelegt. Die Temperatur in der Reaktions- und Entgasungszone lag bei 220°C. Die mittlere Verweilzeit in der Mischzone lag bei 15 s, in der Reaktionszone bei 45 s und in der Entgasungszone bei 30 s.

Das erfindungsgemäße Ionomer wurde über die am Ende der Austragszone (Länge 3 D, Temperatur 220°C) angebrachte Düsenplatte in ein Wasserbad ausgetragen und nach dem Abkühlen granuliert. Das getrocknete Granulat wies einen Schmelzindex MFI von 2,3 g/10 min (bestimmt nach DIN 53 735 bei einer Auflagekraft von 2,16 kg und einer Temperatur von 190°C) auf. Es war völlig geruchlos und stippenfrei.

Das erfindungsgemäße Ionomer, dessen Carboxylgruppen zu 10 Mol.-% mit Polyethylenimin neutralisiert waren, wurde mit Polyethylen einer Dichte von 0,918 $g/cm^3$ und einem Schmelzindex von 2 g/10 min (bestimmt nach DIN 53 735 bei einer Temperatur von 190°C und einer Auflagekraft von 2,16 kg) derart vermischt, daß die resultierende Mischung 0,4 Gew.-% an einpolymerisierter Acrylsäure enthielt. Diese Mischung wurde außerdem noch mit 0,3 Gew.-% 4,4'-Thio-bis-(6-tert.-butyl-3-methyl-phenol) als Wärmestabilisator und 1,8 Gew.-% Dicumylperoxid als Vernetzer ausgerüstet. Hierbei beziehen sich die Gew.-%-Angaben auf die Gesamtmenge der ausgerüsteten, erfindungsgemäßen Mischung.

Die erfindungsgemäße Mischung wurde in der folgenden Weise auf ihre Eignung zur Herstellung von Kabelummantelungen von elektrischen Mittel- und Hochspannungskabeln getestet.

Für die Prüfung auf die Beständigkeit der erfindungsgemäßen Mischung gegenüber der Bildung und dem Wachstum von Wasserbäumchen (water trees) wurde die erfindungsgemäße Mischung zu unvernetzten Platten geformt. Hiernach wurde Kochsalz in Form kleiner Kristalle (Kantenlänge 10 $\mu$m) feinverteilt als Schicht auf eine solche unvernetzte Platte aus der erfindungsgemäßen Mischung aufgestäubt, wonach eine zweite eben solche Platte aufgelegt wurde. Das hierbei resultierende Sandwich wurde bei 200°C während 10 min. auf eine Dicke von 1 mm gepreßt. Hierbei wurde die erfindungsgemäße Mischung vernetzt.

Die so erhaltenen Proben wurden bei 100 %iger Luftfeuchtigkeit mit einem elektrischen Feld einer Feldstärke von 2,5 kW/mm belastet.

Nach der elektrischen Belastung wurde unter einem Lichtmikroskop die Anzahl, die Länge und die Struktur entstandener water trees in den einzelnen Proben ermittelt. Die Feststellung der Zahl der water trees geschah im Strahlengang parallel zur Richtung des elektrischen Feldes, in welchem die Belastung erfolgt war.

Die Zahl der gebildeten water trees wurde auf die Zahl der Kochsalzkristalle bezogen und als Menge in Gew.-% in der Tabelle 2 angegeben.

Die dielektrischen Verluste (tang $\delta$) werden an 1 mm dicken Preßplatten der erfindungsgemäßen Mischung bei 20°C und einer Frequenz von 60 Hz bestimmt.

Die Widerstandsfähigkeit gegenüber der thermisch-oxidativen Alterung wurde an 1 mm dicken vernetzten Preßplatten aus der erfindungsgemäßen Mischung bestimmt. Die Alterung erfolgte bei 150°C im Umluft-Trockenschrank. Die Alterungsstabilität wurde als Zeit in Tagen angegeben, nach der das Material deutlich versprödete Bereiche, welche sich nicht mehr verstrecken ließen, aufwies. Zur Erfüllung üblicher und bekannter Normen müssen Materialien, welche sich für die Herstellung von Kabelummantelungen eignen sollen, noch nach mindestens 10 Tagen im Zugversuch bei Raumtemperatur verstreckbar sein. Die elektrische Durchschlagfestigkeit in kV/mm wurde mit Hilfe des Standardkabeltests an Modellkabeln vor und nach ihrer beschleunigten Alterung bei 70°C während 1000 Stunden bei 9 kV/mm Wechselstrom in der Gegenwart von Wasser innerhalb und außerhalb der Kabel gemessen. Die Modellkabel selbst bestanden aus einem dünnen Kupferleiter eines Durchmessers von 0,75 mm, einer inneren 0,7 mm starken halbleitenden Schicht, einer 1,5 mm dicken Isolationsschicht aus der erfindungsgemäßen Mischung und einer äußeren 0,1 mm starken halbleitenden Schicht. Der äußere Durchmesser dieser Modellkabel lag bei 6,1

EP 0 578 082 A2

mm. Zu Zwecken des Tests wurden diese Modellkabel mit einer Länge von 2 m in Wasser von 70°C eingetaucht und dann mit der Wechselspannung belastet. Nach diesem beschleunigten Alterungstest wurde die Wechselspannung in Schritten von 2 kV/s solange erhöht, bis es zu einem elektrischen Durchschlag kam. Der Test wurde mit Modellkabeln wiederholt, welche nicht der vorstehend beschriebenen beschleunigten Alterung unterworfen worden waren.

Die Ergebnisse dieser Prüfungen werden in der Tabelle 2 den im Vergleichsversuch VB erhaltenen Werten gegenübergestellt. Der Vergleich zeigt, daß die erfindungsgemäße Mischung den bekannten hinsichtlich der thermischen Alterungsstabilität und der elektrischen Durchschlagfestigkeit überlegen war. Ansonsten entspricht sie der herkömmlichen Mischung. Dies untermauert, daß die erfindungsgemäße Mischung hervorragend für die Herstellung von Kabelummantelungen von elektrischen Mittel- und Hochspannungskabeln geeignet ist.

Vergleichsversuch VB

Die Herstellung einer Mischung mit einem bekannten Ionomeren und die anwendungstechnischen Eigenschaften dieser Mischung

Versuchsvorschrift:

Beispiel 2 wurde wiederholt, nur daß anstelle des erfindungsgemäßen Ionomeren ein Tri-n-hexylamin enthaltendes Ionomer verwendet wurde.

Die bei dem Vergleichsversuch VB erhaltenen Meßwerte werden in der Tabelle 2 denen des Beispiels 2 gegenübergestellt.

7

Tabelle 1: Herstellung und Eigenschaften eines erfindungsgemäßen Ionomeren (Beispiel 1) und eines nicht erfindungsgemäßen Ionomeren (Vergleichsversuch VA)

| Eigenschaft | Beispiel 1 | Vergleichsversuch VA |
|---|---|---|
| Reißspannung nach DIN 53 455 (N/mm·mm) | 25,7 | 1,3 |
| Reißdehnung nach DIN 53 455 (%) | 340 | 500 |
| Shore A nach DIN 53 505 | 90 | 40 |
| Quellung (Gew.-%) in<br>- Wasser<br>- Ethanol<br>- Essigsäureethylester | 0,8<br>6,4<br>14,3 | 0,2<br>>100<br>53,2 |

EP 0 578 082 A2

Tabelle 2: Die Herstellung eines erfindungsgemäßen Ionomeren (Beispiel 2) und eines nicht erfindungsgemäßen Ionomeren (Vergleichsversuch VB) und die Eignung dieser Ionomeren für die Herstellung von Kabelummantelungen für elektrische Mittel- und Hochspannungskabel

| Eigenschaften | Beispiel 2 | Vergleichsversuch VB |
|---|---|---|
| water trees nach 90 d (%) | 0 | 0 |
| thermische Alterungsstabilität (d) | 23 | 14 |
| elektrische Durchschlagsfestigkeit (kV/mm) | | |
| – vor der beschleunigten Alterung | 86,3 | 83,7 |
| – nach der beschleunigten Alterung | 69,8 | 51,7 |
| tan $\delta$ (20°C) | $2 \cdot 10^4$ | $2 \cdot 10^4$ |

**Patentansprüche**

1.  Homogenes polymeres Ammoniumsalz von stofflich einheitlicher Zusammensetzung aus

A) mindestens einem Ethylencopolymerisat oder -terpolymerisat, welches, bezogen auf seine Gesamtmenge, 0,5 bis 50 Gew.-% mindestens einer $\alpha,\beta$-olefinisch ungesättigten Alkenmono- und/oder Alkendicarbonsäure, mindestens eines $\alpha,\beta$-olefinisch ungesättigten Alkenmono- und/oder Alkendicarbonsäureanhydrids und/oder mindestens eines $\alpha,\beta$-olefinisch ungesättigten Alkendicarbonsäurehalbesters einpolymerisiert enthält, und
B) mindestens einem Polyalkylenimin und/oder Polyvinylamin mit mehr als 3 Aminogruppen im Molekül.

2. Das homogene polymere Ammoniumsalz nach Anspruch 1, dadurch gekennzeichnet, daß das Ethylencopolymerisat, bezogen auf seine Gesamtmenge, 50 bis 99,5 Gew.-% Ethylen einpolymerisiert enthält.

3. Das homogene polymere Ammoniumsalz nach Anspruch 1, dadurch gekennzeichnet, daß das Ethylenterpolymerisat, bezogen auf seine Gesamtmenge, 5 bis 40 Gew.-% mindestens eines Termonomeren einpolymerisiert enthält.

4. Das homogene polymere Ammoniumsalz nach Anspruch 3, dadurch gekennzeichnet, daß es sich bei den Termonomeren um $C_3$- bis $C_8$-$\alpha$-Monoolefine, Alkadiene, Vinylaromaten, Vinylhalogenide, halogenierte $\alpha$-Monoolefine, Vinylester sowie um die Ester, Amide und Nitrile von $\alpha,\beta$-olefinisch ungesättigten Alkenmono- und Alkendicarbonsäuren handelt.

5. Das homogene polymere Ammoniumsalz nach einem der Ansprüche 1 bis 4, dadurch gekennzeichnet, daß es sich bei den Alkenmonocarbonsäuren um Acrylsäure, Methacrylsäure und Crotonsäure, bei den Alkendicarbonsäuren um Fumarsäure, Maleinsäure und Itaconsäure, bei den Anhydriden um Malein- und Itaconsäureanhydrid und bei den Alkendicarbonsäurehalbestern um Fumarsäure-, Maleinsäure- und Itaconsäuremonoalkylester handelt.

6. Das homogene polymere Ammoniumsalz nach einem der Ansprüche 1 bis 5, dadurch gekennzeichnet, daß es sich bei dem Polyalkylenimin um Polyethylenimin handelt.

7. Die Verwendung der homogenen polymeren Ammoniumsalze gemäß einem der Ansprüche 1 bis 6 als Schmelzkleber sowie für die Herstellung von Folien, Formteilen, lichtempfindlichen Aufzeichnungselementen und Kabelummantelungen für elektrische Mittel- und Hochspannungskabel.

8. Folien, Formteile und Kabelummantelungen für elektrische Mittel- und Hochspannungskabel, enthaltend oder bestehend aus den homogenen polymeren Ammoniumsalzen gemäß einem der Ansprüche 1 bis 6.